# EUROPEAN PATENT APPLICATION

(11) **EP 1 113 667 A2**
(43) Date of publication of application: **04.07.2001**
(21) Application number: 00403597.8
(22) Date of filing: 20.12.2000
(51) Int. Cl.: H04N 5/00

(54) **Process for constructing a database for a digital television service, decoder device implementing the process**

(30) Priority: 30.12.1999 FR 9916748
(71) Applicant: THOMSON multimedia, 92100 Boulogne Billancourt (FR)
(72) Inventor: Crocitti, Valérie, 92100 Boulogne-Billancourt (FR); Deniau, Eric, 92100 Boulogne-Billancourt (FR); Schaefer, Ralf, 92100 Boulogne-Billancourt (FR)
(74) Representative: Kohrs, Martin

(57) **Abstract**

The present invention relates to a process for constructing databases for digital television services, characterized in that it comprises a step of tuning to a carrier frequency, a step of extracting the data representing the information table of the network corresponding to this frequency, a step of storing the trio of information items constituted by the information table, the carrier frequency, and an identifier, a step of extracting and storing the trio constituted by the service table, the frequency of the carrier and the identification of the SDT service table.

The invention also relates to the digital television receiver implementing the process, and the uses of the process for a services installation procedure and for maintening the database section.

## Description

The present invention relates to a process for constructing a database for a digital television service, the decoder device implementing the process and the use of the database.

The invention deals with digital television decoders which receive audio-visual information and applications through at least one transmission channel. The digital decoder can process the audio-visual data and/or execute an application and display a result on the display devices.

Today, digital television is mainly organized as a vertical market, which implies that a broadcaster distributes several audio or visual data services through a broadcasting system and at the same time provides television decoders which are tailored or even optimised for the service of the broadcaster. This kind of optimisation relates equally to the installations of services for broadcasting through the MPEG/DVB tables. In the case of vertical markets, broadcasters can store all the information in such a way that the decoder can perform very rapid installation, this information being stored in a list of services contained, for example, in the network information table (NIT). In a horizontal organisation of the market, such optimisation is not possible since several broadcasters control various bouquets and various networks. In this case, it may be useful to store the tables of the digital video broadcasters (DVB: Digital Video Broadcast table) in a database and to inject these stored tables into the MPEG stack of the operating system of a digital decoder.

The object of the invention is to provide a database construction process indexed to the service of several broadcasters without requiring the intervention of the user during installation.

This object is achieved by the process according to Claim 1.

Another object is to propose a use of the process for the updating of the database installed on the decoder so as to cater for the appearance of new services and the disappearance of existing services. This object is achieved by the process according to Claim 3.

Lastly, a final object is to construct a decoder device comprising a generic mechanism for using the database which works with any digital television operating system.

This object is achieved by the decoder device according to Claim 5.

Other features of the invention are defined in Claims 2, 4 and 6 to 7.
Other features and advantages of the invention will become more clearly apparent in the light of the description herein below given with reference to the appended drawings in which:
- Figure 1A represents a diagrammatic view of the decoder device during the database creation procedure;
- Figure 1B represents a diagrammatic view of the decoder during the use of the data in the database in the course of the services installation procedure which is an exemplary use;
- Figure 1C represents a diagrammatic view of the decoder during the database maintenance procedure;
- Figure 2 represents a logic diagram of the working of the decoder using the various procedures of Figures 1.

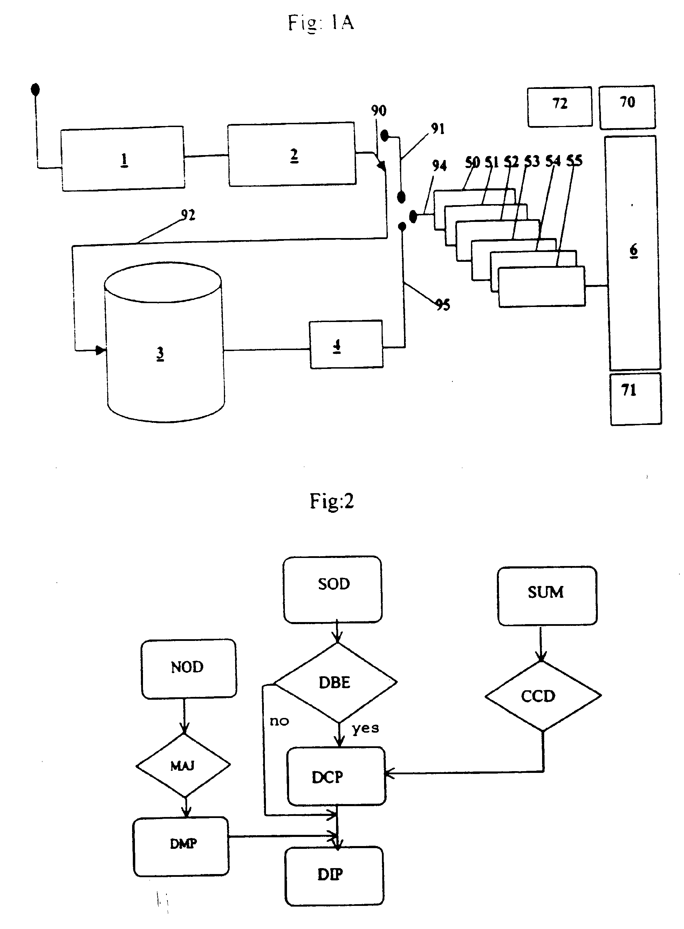

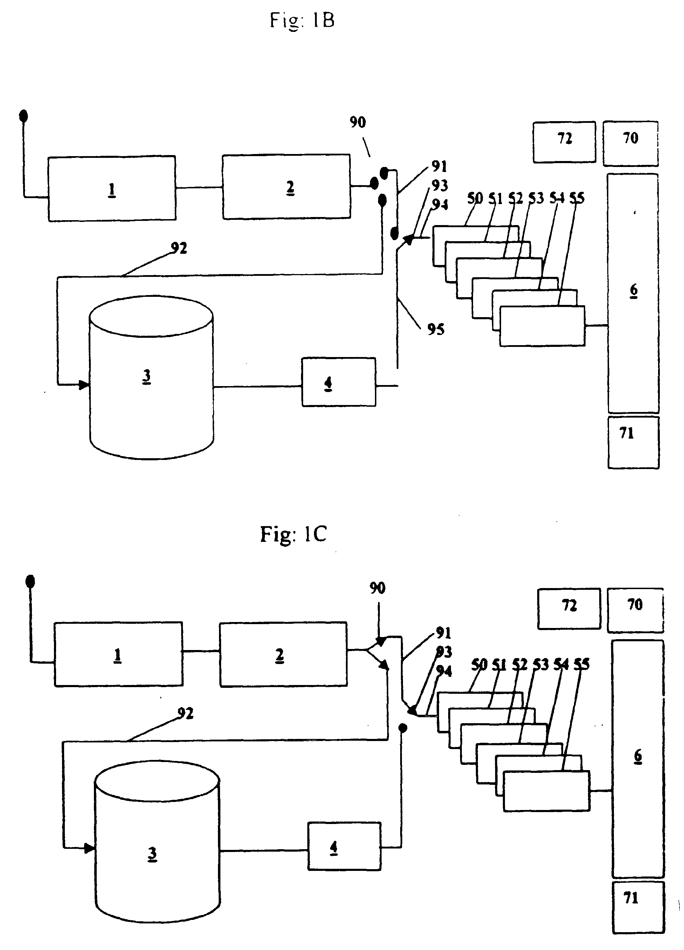

The invention will now be described in conjunction with Figures 1 to 2. It consists of a decoder comprising a tuning circuit (1) or tuner linked to an upstream demultiplexer (2) which are conventional components of a decoder and interposed between the demultiplexer and the operating system (6) a device which allows the implementation of the process and the uses of this process according to the invention. At the output of the decoder and of the upstream demultiplexer (2) is wired a switch (90) with two directions, a first to a line (92) for connection to a mass storage system (3) such as a hard disk, which is linked to a downstream demultiplexer (4) whose output is linked to a link (95) whose end can be connected by a switch (93) with two directions to an input link (94) entering a plurality of buffers, represented by way of example in the figure by the references (50 to 55). The input link (94) entering the plurality of buffers can also be linked by the switch (93) to a link (91) which is itself linked to the other direction of the switch (90). The operating system (6) of the decoder also comprises a program for injecting services (70), a program for updating databases (71), a database section creation program (72). When one or the other of these programs is executed by the processor of the decoder, its execution allows the setting of the switches according to one of the three configurations represented in Figures 1A to 1C corresponding respectively to the procedure for creating databases in the case of Figure 1A, to the procedure for using the database in the case of Figure 1B and to the procedure for maintaining and for updating the database in the case of Figure 1C. In the case of Figure 1A, it may be seen that the upstream demultiplexer (2) is linked by the switch (90) solely to the mass memory (3). In the case of Figure 1B, the mass memory (3) is linked by the downstream demultiplexer (4), the link (95) and the switch (93) to the plurality of buffers (50 to 55) of the decoder. In the case of Figure 1C, the upstream demultiplexer (2) is linked by the switch (90) both to the buffer stack (50 to 55) and to the mass memory (3) and the other branch of the switch (93) is open.

Figure 2 represents the logic diagram showing how the decoder works. The latter, during the first switch on decoder SOD step, runs the DBE (database empty) following test which makes it possible to determine whether the database is empty. If the reply is yes, the operating program runs the procedure represented in the DCP step which is the database creation procedure. Once this procedure has been executed, the operating system of the decoder runs the DIP procedure which is the data injection procedure for injecting data into the buffers (50 to 55) which are output connected to the upstream demultiplexer (2). If the answer is no, the case where the database is not empty, the program goes directly to the procedure for injecting services into the buffers. In parallel, a database section creation program can be run from the installation set-up menu (SUM) by selecting the database creation command (CCD). Likewise, during the normal decoding operations (NOD, Normal Operation Decoding), that is to say while the user is watching a selected channel, the database maintenance procedure DMP is run at regular intervals by the decoder and should there be modifications to the information, the latter is injected into the corresponding buffer. As explained earlier, the database creation procedure (DCP) is called either by the switch on decoder procedure (SOD), or directly by the user via the set-up menu (SUM). In these cases as is represented in Appendix 1, the tuning circuit (1) is tuned to the lowest carrier frequency (cf) for example. This signal is transmitted to the upstream demultiplexer (2) which filters the transmissions received so as to extract therefrom the current-network information table (actual NIT) which contains the list of services offered by the network and the services data table (actual SDT) which contains the data affording access to a service. As represented in Appendix 1, this procedure, after having extracted the network information table (NIT), compresses this information and stores a trio comprising the compressed information item, the value of the carrier frequency and an identifier of this table (NIT, ID). Likewise, the decoder after having extracted the services data table compresses this datum and stores it in the mass memory (3) in a table comprising a trio of information items: the compressed information item, the carrier frequency and the identifier of the data service table. The database creation procedure then continues by going to the next carrier frequency, either by increasing, if it is the lowest frequency which is chosen initially, or by decreasing if it is the highest and by repeating the previous operations for each carrier frequency of the frequency span, as represented in Appendix 1.

When the operating system goes to the procedure (DIP), for example for installing services by table injection, the system places the decoder in the configuration represented in Figure 1B in which the mass memory (3) is linked by the downstream demultiplexer (4) to the plurality of buffers (50 to 55). The system, as represented in Appendix 2, begins with the lowest carrier frequency and despatches a query to the database via the QUERY-DATABASE command (cf, NIT). After extracting the network information item, the latter is decompressed by the decompress command (NIT-actual) and the same commands are performed so as to extract the service information item (SDT-actual). A carousel is then generated and despatched to the downstream demultiplexer. The latter applies its filters and puts the filtered information item into one of the associated buffers. This procedure is performed for each of the carrier frequencies. Next, the decoder is placed in its normal working mode corresponding to the wiring of the switches according to Figure 1C. In this case, the information contained in the buffers is used by the operating system to extract therefrom the information item corresponding to the transmission selected by the user and to despatch this information item to the upstream demultiplexer (2). In this configuration, the decoder is capable of maintaining its database up to date so as to cater for the fact that a broadcaster modifies the nature and the composition of his transmissions. This may happen when the broadcaster adds new services to his bouquet or when he withdraws certain services which do not enjoy commercial success. The maintenance procedure (DMP) thus makes it possible to keep the database up to date without requiring additional hardware. This procedure is set out explicitly in Appendix 3 and comprises a first step of locking onto the carrier frequency (cf) of the transmission desired by the user and then of extracting by the demultiplexer (2) the table (actual NIT) and of comparing this extraction with the information item contained in the mass memory (3) obtained via the Query-database query. If the version of the table (actual NIT) is higher than the version of the database, this latter extracted version is stored in compressed form in the database instead of the old version. Next, the procedure continues by scanning the other network information tables (NIT) and by performing the comparisons as previously so as to store the higher versions. Lastly, an identical procedure is applied in respect of the service data tables (SDT).

Thus according to the invention, the process for constructing databases for digital television services, comprises the following steps:
a) - a step of tuning by the tuner a carrier frequency;
b) - a step of filtering by a demultiplexer (2) the signal received by the tuner (1) tuned to a given carrier frequency (cf);
c) - a step of extracting the data (actual NIT) representing the information table of the current network;
d) - a step of storing (3) in a table (31) the trio of information items constituted by the information table (actual NIT), the carrier frequency, and an identifier;
e) - a step of extracting the data representing the service table (actual SDT);
f) - a step of storing (3) the trio constituted by the service table (actual SDT), the frequency of the carrier (cf) and the identification of the SDT service table.

According to another feature, the process comprises a step of compressing the data (actual NIT, actual SDT) thus obtained.

According to another feature, the compression step uses a key for storage in a section (30) of the database which is also stored with the information, the said key being derived from the carrier frequency (cf).

According to another feature, the use of the process in a services installation procedure consists in interrogating, for a given carrier frequency (cf) the content of the database so as to extract therefrom the service information table (31);
- a step of decompressing the network information table (NIT) and the service table (SDT);
- a step of despatching this information to buffers (50 to 55) for use by the decoder.

According to another feature, the use of the process in a procedure for maintaining the database section, consists in running the database construction procedure for a given carrier frequency (cf) and in verifying that the version of the network information tables obtained by the procedure is higher than the version recorded in the database and in this case in storing the trio in compressed form.

According to another feature, the decoder device implementing the process comprises means (3) for storing the construction of a database containing network (NIT) and service (SDT) tables (31);
- updating means (DMP);
- means (DIP) for injecting the tables into the interface of the application program of the demultiplexer (2) so as to select the filter appropriate to the desired channel;
- means for copying into the MPEG stack of the operating system the database data provided for a given carrier frequency (cf).

According to another feature, the selected table segment is injected by injection means (DIP) into the buffer (50 to 55) of the channel of the decoder constituting an MPEG stack.

According to another feature, the database comprises :
- the compressed data of the network information table (NIT), the frequency of the carrier and an identifier;
- the compressed data of the SDT services table, the frequency of the carrier and an identifier.

The advantages of the above described invention are that the solution allows the rapid installation of digital decoders tailored to a horizontal market which is especially useful in respect of so-called digital video broadcasting decoders for multimedia home platform (DVB-MHP). The solution described is generic since it can work with any digital television operating system and it can self-adapt to any new service.

It should be obvious to those versed in the art that the present invention allows embodiments in numerous other specific forms without departing from the invention's field of application as claimed. Consequently, the present embodiments should be regarded by way of illustration, but may be modified within the field defined by the scope of the appended claims, and the invention should not be limited to the details given hereinabove.

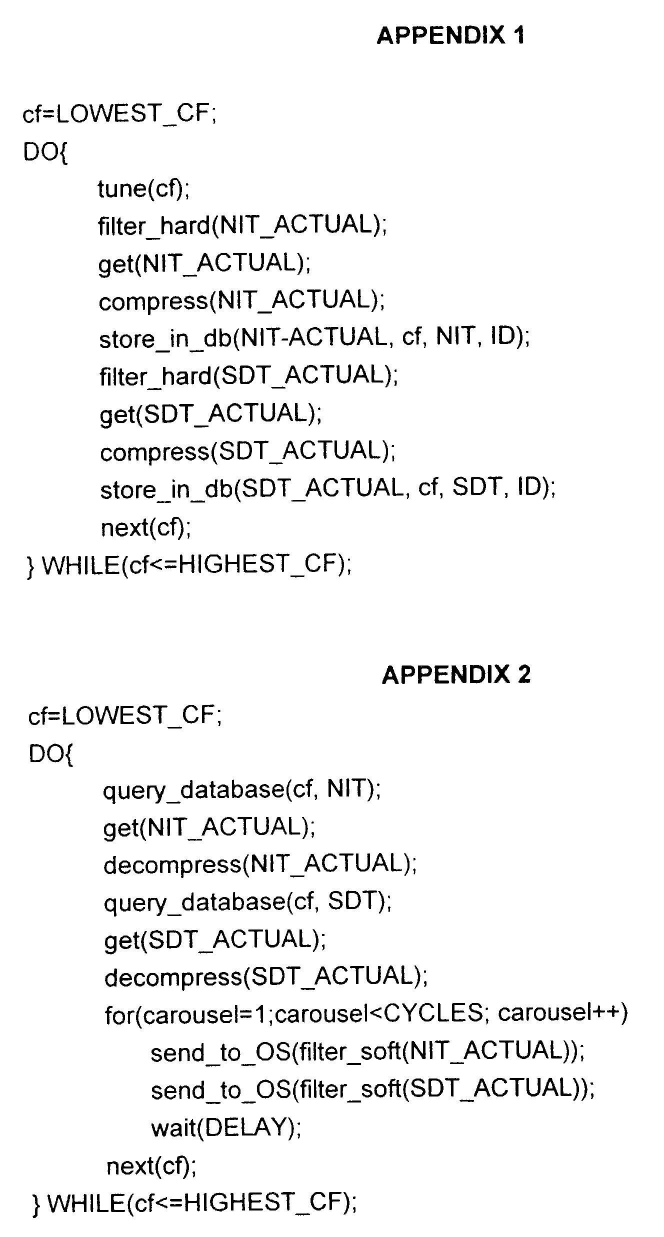

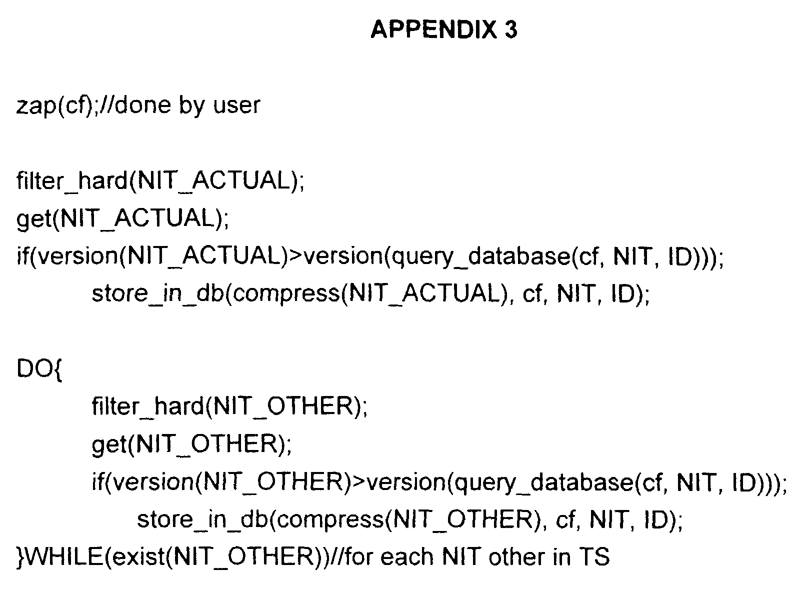

## Claims

1. Process for constructing databases for digital television services, characterized in that it comprises:
a) - a step of tuning by the tuner a carrier frequency;
b) - a step of filtering by a demultiplexer (2) the signal received by the tuner (1) tuned to a given carrier frequency (cf);
c) - a step of extracting the data (actual NIT) representing the information table of the current network;
d) - a step of storing (3) in a table (31) the trio of information items constituted by the information table (actual NIT), the carrier frequency, and an identifier;
e) - a step of extracting the data representing the service table (actual SDT);
f) - a step of storing (3) the trio constituted by the service table (actual SDT), the frequency of the carrier (cf) and the identification of the SDT service table.

2. Process according to Claim 1, characterized in that it comprises a step of compressing the data (actual NIT, actual SDT) thus obtained.

3. Process according to Claim 1, characterized in that the compression step uses a key for storage in a section (30) of the database which is also stored with the information, the said key being derived from the carrier frequency (cf).

4. Process according to Claim 1, characterized in that it furthermore includes:
g) - a step of searching by the tuner (1) for the next carrier frequency and repetition of steps b) to f) until the whole of the frequency span has been swept.

5. Use of the process according to either of Claims 1 or 4 in a services installation procedure, characterized in that it consists in interrogating, for a given carrier frequency (cf) the content of the database so as to extract therefrom the service information table (31);
- a step of decompressing the network information table (NIT) and the SDT service table;
- a step of despatching this information to buffers (50 to 55) for use by the decoder.

6. Use of the process according to either of Claims 1 or 4 in a procedure for maintaining the database section, characterized in that it consists in running the database construction procedure for a given carrier frequency (cf) and in verifying that the version of the network information tables obtained by the procedure is higher than the version recorded in the database and in this case in storing the trio in compressed form.

7. Decoder device implementing the process according to either of Claims 1 or 4, characterized in that it comprises means (3) for storing the construction of a database containing network (NIT) and service (SDT) tables (31);
- updating means (DMP);
- means (DIP) for injecting the tables into the interface of the application program of the demultiplexer (2) so as to select the filter appropriate to the desired channel;
- means for copying into the MPEG stack of the operating system the database data provided for a given carrier frequency (cf).

8. Decoder device according to Claim 7, characterized in that the selected table segment is injected by injection means (DIP) into the buffer (50 to 55) of the channel of the decoder constituting an MPEG stack.

9. Device according to Claim 7 or 8, characterized in that the database comprises the compressed data of the network information table (NIT), the frequency of the carrier and an identifier;
- the compressed data of the SDT services table, the frequency of the carrier and an identifier.
